Europäisches Patentamt

European Patent Office

Office européen des brevets

(19)

(11) Publication number: **0 489 364 A1**

## EUROPEAN PATENT APPLICATION

(12)

(21) Application number: **91120473.3**

(22) Date of filing: **29.11.91**

(51) Int. Cl.⁵: **G02C 5/22**

(30) Priority: **03.12.90 IT 4173990**

(43) Date of publication of application:
**10.06.92 Bulletin 92/24**

(84) Designated Contracting States:
**DE FR GB**

(71) Applicant: **VISOTTICA S.p.A.**
**Via Vecchia Trevigiana, 11**
**I-31058 Susegana (Province of Treviso)(IT)**

(72) Inventor: **Sgobino, Claudio**
**Via U. Zilli, 14**
**I-33100 Udine(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Elastic hinge for spectacles.**

(57) Elastic hinge for spectacles, which comprises a lockable slider element (1) provided with a raised portion (9) and a ring (6). In the ring (6), a pin (7a,7b) provided with an annular abutment ridge (8) is accommodated and a spring (5) is arranged between the raised portion (9) and the abutment ridge. The slider is lockably connectable to a spectacle rod (2) by means of a screw (11). An elongated body (14) is fixable on the slider (1). The elongated body (14) is provided at one end with a lug (21) which engages the pin (7a) and at the other end with wings (15) having holes (17) for fixing to a spectacle body.

Fig. 3

The present invention relates to an elastic hinge for spectacles.

In spectacles, be they sight-correction prostheses or not, there used to be the problem related to the elasticity of the rods with respect to the body of the spectacles in order to obviate the problem of the breakage of the hinge system between said rods and said spectacle body.

In recent years, various types of elastic hinges have been developed in order to obviate this problem and many others; said known hinges, however, often have an extremely complicated construction and exploit various principles of combined application of levers with return springs. In order to combine the two principles, compressed springs, or springs which are extended during the pulling of each rod from the open resting position to an even more open position, are variously used. This also allows an easy adaptation of the same frame to different users.

Said known hinges have a considerable number of components and a usually complicated design which is thus expensive from the point of view of both execution and assembly.

The aim of the present invention is to eliminate or substantially reduce the disadvantages described above in known types by providing an elastic hinge for spectacles which has a limited number of components.

Within the scope of the above aim, an object of the present invention is to provide a hinge which is relatively easy to assemble.

Not least object of the present invention is to provide an elastic hinge for spectacles which is relatively easy to manufacture and at competitive costs.

This aim, these objects and others which will become apparent hereinafter are achieved by an elastic hinge for spectacles according to the invention, characterized in that it comprises a slider which is provided with accommodation means for elastic means and with means for locking it to a spectacle rod, said rod having an accommodation seat for said slider which is provided with receiving means for said locking means, said slider having guiding and insertion grooves for means for fixing said rod to a spectacle body.

Further characteristics and advantages of the invention will become apparent from the description of a preferred but not exclusive embodiment of an elastic hinge for spectacles according to the invention, illustrated only by way of non-limitative example in the accompanying drawings, wherein:

figure 1 is an exploded perspective view of the components of an elastic hinge according to the invention;

figure 2 is a perspective view of a complete slider;

figure 3 is a longitudinal sectional view of a rod with the hinge mounted thereon;

figure 4 is a perspective view of a rod with a hinge according to the invention mounted on a pair of spectacles.

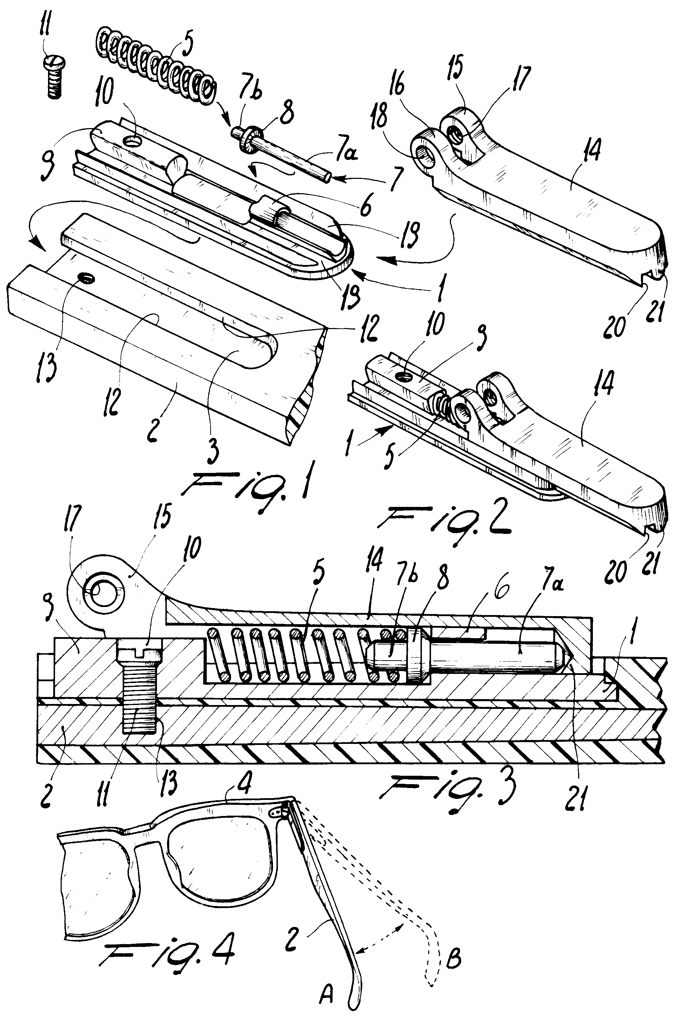

With reference to figures 1 to 3, an elastic hinge for spectacles comprises a lockable slider element 1 which is provided with means for accommodating elastic means, which comprise a cylindrical spring 5, and with means for locking it to a spectacle rod 2.

The rod 2 has an accommodation seat 3 for the slider 1, and said accommodation seat 3 is furthermore provided with receiving means for the locking means. The slider 1 furthermore has guiding and insertion grooves 19 for means for fixing the rod 3 to a spectacle body 4.

The means for accommodating the elastic means 1 comprise a ring 6 which is defined within said slider 1 and within which a pin 7 can be inserted; said pin has an annular abutment ridge 8 which protrudes radially therefrom proximate to one of its ends.

Said annular ridge 8 divides the pin 7 into portions with different lengths, identified by the reference numerals 7a and 7b. The shorter end or portion 7b can be inserted within the spring 5. The accommodation means furthermore comprise a raised portion 9 which rises from the slider 1 and constitutes an abutment for the spring 5, as is more clearly illustrated in figure 3.

The means for locking the slider to a spectacle rod 2 comprise an at least partially threaded through hole 10 which is defined within the raised portion 9 and a screw 11 which can be coupled to the thread of the through hole 10 and protrudes below the slider 1, as illustrated in figure 3.

The accommodation seat 3 in the rod 2 comprises a recess which is provided with edges 12 which protrude inward in an upward region and define grooves for the insertion of the slider 1 within the rod 2.

The receiving means for the locking means comprise a dead cavity 13 defined in the rod 2 in a surface which is comprised within the accommodation seat 3.

The means for fixing the rod 2 to the spectacle body 4 comprise an elongated body 14 which has a pair of wings 15 and 16 at one of its ends.

When the body 14 is mounted on the slider 1, said wings 15 and 16 delimit between them a space for access to the head of the screw 11.

Each of the wings 15 and 16 is provided with a respective hole 17 and 18; said holes have their axes perpendicular to the axis defined by the body 14 and are coaxial.

The body 14 has, on the surface opposite to the one from which the wings 15 and 16 extend, raised portions 20 for mating with the grooves 19 of the slider 1.

The body 14 finally has a lug 21 which is arranged between the mating raised portions 20 and is suitable for compressing the spring 5 by acting on the pin 7.

The assembly of the hinge according to the invention is as follows: the end 7a of the pin 7 is inserted within the ring 6, then the body 14 is mounted on the slider 1 up to the level of the ring 6. At this point the spring 5 is coupled to the end 7b of the pin 7 and is compressed until it enters in its seat between the ring 6 and the raised portion 9. Once this operation has ended, the body 14 is caused to slide on the slider 1 until complete mating is obtained, consequently with the lug 21 in contact with the pin 7, as illustrated in figure 3. The screw 11 is then arranged in the hole 10 and the slider 1 is inserted in the accommodation seat 3 until the screw 11 is above the cavity 13. Finally, the slider is locked by tightening the screw 11, as illustrated in figure 3.

With reference to figure 4, the behavior of the hinge according to the invention is described: when the rod 2 is in the position indicated by A, with respect to the spectacle body 4, said hinge is used like any ordinary hinge. When the rod 2 is instead moved to the position B, then the rod 2 extracts the slider 1 below the body 14. In this manner, the lug 21 acts on the pin 7, compressing the spring 5. By releasing the rod 2, the spring 5 extends and returns said rod 2 from position B to position A.

It has been observed that the invention achieves the intended aim and objects, and furthermore provides an elastic hinge which has a very small number of components and a relatively easy assembly.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Elastic hinge for spectacles, characterized in that it comprises a lockable slider element (1) which is provided with accommodation means (6,7,9) for elastic means (5) and with means (10,11) for locking it to a spectacle rod (2), said rod having an accommodation seat (3) for said slider (1) which is provided with receiving means (13) for said locking means (10,11), said slider (1) having guiding and insertion grooves (19) for means (14) for fixing said rod (2) to a spectacle body (4).

2. Hinge according to claim 1, characterized in that said elastic means comprise a cylindrical spring (5).

3. Hinge according to the preceding claims, characterized in that said accommodation means comprise a ring (6) which is defined within said slider (1) and inside which a pin (7) can be inserted, said pin (7) having an annular abutment ridge (8) which protrudes radially therefrom proximate to one of its ends and divides it into portions (7a,7b) with different lengths, said end being insertable within said spring (5), said accommodation means furthermore comprising a raised portion (9) which protrudes from said slider (1) and is suitable for constituting an abutment for said spring (5).

4. Hinge according to one or more of the preceding claims, characterized in that said locking means comprise an at least partially threaded through hole (10) which is defined within said raised portion (9) of said slider (1) and a screw (11) which can be associated with the thread of said through hole (10).

5. Hinge according to one or more of the preceding claims, characterized in that said accommodation seat (3) in said rod (2) comprises a recess which is provided with edges (12) which protrude inward in an upward region and define grooves for the insertion of said slider (1).

6. Hinge according to one or more of the preceding claims, characterized in that said receiving means comprise a dead cavity (13) which is defined in said rod (2) in a surface comprised within said recess.

7. Hinge according to one or more of the preceding claims, characterized in that said fixing means comprise a body (14) which extends longitudinally and has, on one of its ends, a pair of wings (15,16) which protrude from said body (14), each of said wings (15,16) being provided with a hole (17,18) the axis whereof is perpendicular to the axis defined by said body (14), said wings (15,16) being coaxial, said body (14) having, on the surface opposite to that from which said wings protrude, raised portions (21) for mating with said guiding grooves of said slider (1).

8. Hinge according to one or more of the preceding claims, characterized in that said body (14) has a lug (21) which is arranged between said mating raised portions (20) and is suitable for compressing said spring (5) by acting on said pin (7).

Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 166 822 (OBE-WERK)<br>* page 4 - page 6 * | 1-4 | G02C5/22 |
| Y | EP-A-0 191 944 (OBE-WERK)<br>* claims * | 1-4 | |
| A | FR-A-2 424 558 (OBE-WERK)<br>* claims * | 1-8 | |
| A | FR-A-2 250 127 (OBE-WERK)<br>* page 2, line 19 - page 3 * | 1-8 | |
| A | US-A-4 005 930 (A. GUENIN)<br>* column 1, line 43 - column 2 * | 1-8 | |
| A | FR-A-2 466 788 (OBE-WERK)<br>* claims * | 1-6 | |
| A | EP-A-0 201 455 (LN INDUSTRIES)<br>* page 3 - page 4 * | 1-6 | |
| A | EP-A-0 239 011 (VISOTTICA)<br>* claims * | 1-6 | TECHNICAL FIELDS SEARCHED (Int. Cl.5 )<br><br>G02C |

The present search report has been drawn up for all claims

| Place of search | Date of completion of the search | Examiner |
|---|---|---|
| THE HAGUE | 19 FEBRUARY 1992 | CALLEWAERT H.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)